# EUROPEAN PATENT APPLICATION

(11) **EP 4 032 755 A1**
(43) Date of publication of application: **27.07.2022**
(21) Application number: 21153444.1
(22) Date of filing: 26.01.2021
(51) Int. Cl.: B60R 21/13, B62D 23/00

(54) **SUPPORT STRUCTURE FOR A VEHICLE AND METHOD FOR ASSEMBLING PARTS OF A SUPPORT STRUCTURE FOR A VEHICLE**

(71) Applicant: Volvo Construction Equipment AB, 631 85 Eskilstuna (SE)
(72) Inventor: WESTLUND, Carl-David, 635 31 Kvicksund (SE); KUCYNIAK, Rafal, 632 21 Eskilstuna (SE); JURGEC, Tonie, 632 39 Eskilstuna (SE)
(74) Representative: Kransell & Wennborg KB

(57) **Abstract**

The invention relates to a method for assembling parts of a support structure (200) for a vehicle. The method comprises: providing (300) a first part (100) comprising a protruding connection element (102), wherein at least a portion (104) of the connection element is configured to receive an adhesive; providing (302) a second part (106) in the form of a tubular element configured to be connected to the first part; depositing (304) an adhesive on the portion of the protruding connection element configured to receive the adhesive; connecting (306) first part to the second part by pressing the tubular element onto the protruding connection element; and attaching (308) a fixation element (108) to the first part and to the second part to fixate the first part in relation to the second part.

## Description

### TECHNICAL FIELD

The invention relates to a support structure for a vehicle and to a method for assembling parts of the support structure for a vehicle. In particular, the invention relates to a method for simplifying the assembly of a large support structure such as a roll-over protection structure, and to a support structure assembled using the described method.

The invention can be applied in heavy-duty vehicles, such as construction machines, trucks, buses, and other construction equipment and vehicles. Accordingly, although the invention will be described with respect to a support structure for a construction machine such as a wheel loader, the invention is not restricted to this structure or vehicle but may also be used in other types of structures and for other types of vehicles.

### BACKGROUND

Working machines such as wheel loaders, dumpers, excavators, and the like are often operated in dangerous environments and it is therefore important to provide appropriate protection for a vehicle operator. There may for example be a risk of objects falling on the machine or of the machine tipping over in which case a vehicle operator must be well protected inside the vehicle cab.

To provide operator safety, heavy duty vehicles often include support structures reinforcing the vehicle cab, sometimes referred to as a roll-over protection structure (ROPS). A ROPS needs to be mechanically robust and to achieve this it is often manufactured and assembled as one piece.

However, such a support structure is relatively large and may require specialized tools and manufacturing lines for assembly. In particular, known manufacturing methods involve welding in the final assembly steps. This means that surface treatment such as corrosion protection and/or painting cannot be performed until after the full structure is assembled. Thereby, surface treatment must be performed on the final support structure as a whole, which due to its weight and size requires specialized and sometimes costly and complicated tools.

Accordingly, in view of the above it is desirable to simplify manufacturing and assembly of large support structures for vehicles.

### SUMMARY

An object of the invention is to provide a simplified method for assembling parts of a support structure for a vehicle.

The object is achieved by a method according to claim 1. The method comprises providing a first part comprising a protruding connection element, wherein at least a portion of the connection element is configured to receive an adhesive; providing a second part in the form of a tubular element configured to be connected to the first part; depositing an adhesive on the portion of the protruding connection element configured to receive the adhesive; connecting first part to the second part by pressing the tubular element onto the protruding connection element; and attaching a fixation element to the first part and to the second part to fixate the first part in relation to the second part.

In the present context, the support structure may be any structure intended to provide mechanical support in or for a vehicle. The support structure comprises at least two parts assembled by the described method. However, the support structure may consist of a large number of parts where some are assembled using the described method and where other parts are assembled using other methods.

The present invention is based on the realization that a support structure consisting of multiple parts can be assembled by configuring a connectable tubular elements to be attached to another element using an adhesive in combination with a fixation element keeping the parts in place while allowing the adhesive to harden. An advantage of the described method is that various surface treatments of the different parts can be performed prior to assembly since no welding is required in the assembly process. This saves space in the assembly plant since there is no need for the whole of the finished support structure to undergo surface treatment.

A further advantage of the described method is that the fixation element holds the parts together while the adhesive hardens so that the support structure can proceed immediately to the next step in the assembly line which saves time during assembly. The same advantages are present also for other support structures such as an engine hood frame or other structures where tubular elements are used.

According to one embodiment of the invention, the portion of the connection element configured to receive an adhesive comprises a recess, and the thickness of the adhesive is defined by the depth of the recess. The thickness and location of the adhesive is thereby easily controllable, which simplifies the method.

According to one embodiment of the invention, the protruding connection element comprises a ridge, and pressing the tubular element onto the protruding connection element comprises applying a force so that the ridge presses against an inner wall of the tubular element when the first and second parts are assembled. The ridge is configured to ensure that a tight seal is formed between the first and second parts, thereby preventing moisture and dirt from reaching the inside of the tubular element. Preferably, the ridge is arranged on an end portion of the connection element and aligned perpendicularly to the direction of insertion of the protruding connection element.

According to one embodiment of the invention, the method comprises attaching the fixation element using an attachment method not involving heating. The fixation element may for example be attached using screws, bolts, rivets, or the like. Thereby, the parts of the support structure can be pretreated prior to assembly using pretreatment methods and steps such as electroplating or painting.

According to one embodiment of the invention, the first element may be a corner element comprising a plurality of protruding connection elements, and the method may comprise attaching tubular elements to each of the protruding connection elements. Corner elements are used in support structures such as roll over protection structures, and by configuring the corner structures with several protruding connection elements as described, the remaining tubular elements can remaining unchanged, thus facilitating an implementation of the assembly method without the need to redesign all of the parts of the support structure. The corner element as such may be manufactured by means of welding, casting, or other methods.

According to a second aspect of the invention, the object is achieved by a support structure for a vehicle according to claim 9. The support structure comprises: a first part comprising a protruding connection element, wherein at least a portion of the connection element is configured to receive an adhesive; a second part in the form of a tubular element, wherein the protruding connection element is arranged in an end portion of the tubular element; an adhesive arranged on the protruding connection element and configured to attach the first part to the second part; and a fixation element attached to the first part and to the second part to fixate the first part in relation to the second part. The support structure may for example be a roll over protection structure ROPS.

Effects and features of this second aspect of the present invention are largely analogous to those described above in connection with the first aspect of the invention. Further advantages and advantageous features of the invention are disclosed in the following description and in the dependent claims.

### BRIEF DESCRIPTION OF THE DRAWINGS

With reference to the appended drawings, below follows a more detailed description of embodiments of the invention cited as examples.

In the drawings:
Figs. 1A-B are schematic illustrations of parts of a support structure according to an embodiment of the invention;
Fig. 2 is a schematic illustration of a support structure according to an embodiment of the invention;
Fig. 3 is a flow chart outlining steps of a method according to an embodiment of the invention; and
Fig. 4 is a schematic illustration of a wheel loader comprising a support structure according to an embodiment of the invention.

### DETAILED DESCRIPTION OF EXAMPLE EMBODIMENTS OF THE INVENTION

In the following detailed description, various embodiments of a support structure and a method for manufacturing a support structure according to the present invention are mainly discussed with reference to a roll-over protection structure. It should be noted that this by no means limits the scope of the present invention which is equally applicable to other support structures for a vehicle.

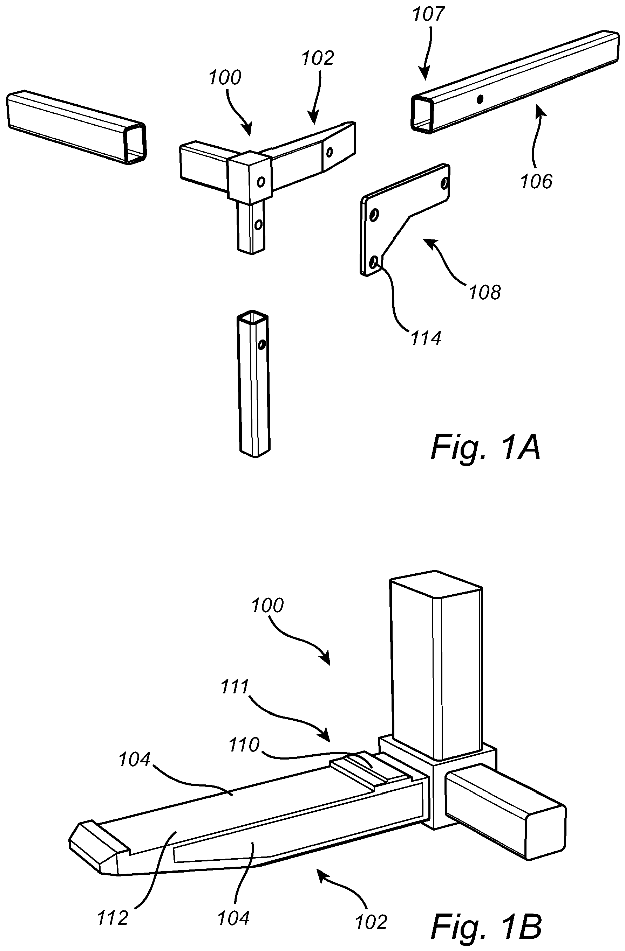

Fig. 1A. is an exploded view schematically illustrating parts of a support structure and Fig. 1B illustrates a corner element 100 of a support structure. Fig. 1A illustrates a first part 100 comprising a protruding connection element 102, wherein at least a portion 104 of the connection element is configured to receive an adhesive 112. The first part 100 is here a corner element 100 of a support structure. The second part 106 is a tubular element 106 and the protruding connection element 102 is configured to be inserted into an end portion 107 of the tubular element 106. The support structure further comprises a fixation element 108 configured to be attached to the first part 100 and to the second part 106 to fixate the first part 100 in relation to the second part 106.

Fig. 1B illustrates details of the corner element 100. In particular, Fig. 1B illustrates that the protruding connection element 102 which is a part of the corner element 100 comprises portions 104 configured to receive an adhesive 112. The portions 104 are for example recessed to receive an adhesive where the thickness of the adhesive is determined by the depth of the recess. The recess may cover part or all of the surface of one or more sides of the connection element 102. Moreover, the recess may be formed with edges or walls so that an adhesive stay within the recess once deposited. The surface of the portions 104 configured to receive the adhesive may further be roughened through grinding, milling or other means in order to provide a surface roughness improving the adhesion of the adhesive to be used. Other types of surface treatments are also feasible for achieving desirable surface properties of the portions 104 of the connection element 102 configured to receive the adhesive. Moreover, the portions 104 may be adapted to receive an adhesive by comprising grooves, trenches, ridges, pits or the like.

Fig. 1B further illustrates that the protruding connection element 102 comprises a ridge 110 configured to press against an inner wall of the tubular element 106 at the end portion 107 of the tubular element 106 when the tubular element 106 pressed onto the connection element 102. The connection element 102 may comprise a ridge 110 on one surface as illustrated in Fig. 1B, bit it may equally well be provided with ridges or similar protruding elements on multiple sides. Moreover, the skilled person readily realizes that structures of another shape are also possible aside from a ridge.

The ridge 110 ensures that a tight seal is formed between the connection element 112 and the tubular element 106 such that moisture and dirt is prevented from reaching the inside of the tubular element 106. The ridge is located at an end portion 111 of the connection element 102 closest to the final joint, i.e. the end portion 111 closest to the opening of the tubular element 106 once the two parts are assembled. The ridge 110 also helps to keep the two parts 100, 106 together to allow the fixation element 108 to be attached. The fixation element 108 is here exemplified by a plate 108 comprising holes 114 for receiving screws so that the plate 108 can be attached to the corner element 100 and the tubular element 106.

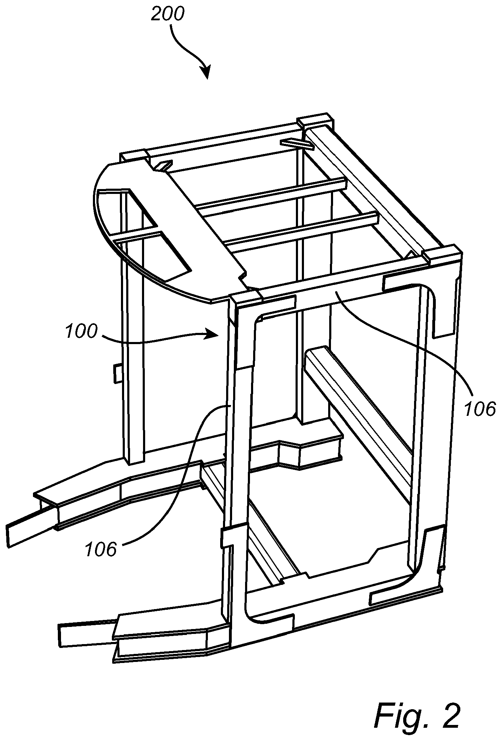

Fig. 2 illustrates a roll-over protection structure 200 comprising the corner element 100 and attached tubular elements 106.

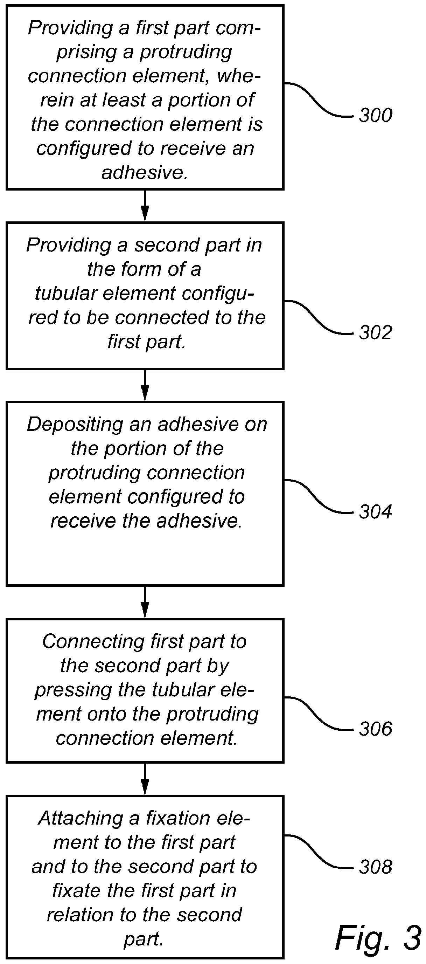

Fig. 3 is a flow chart outlining steps of the method for assembling parts of a support structure 200 for a vehicle, and the method will be described with further reference to Figs. 1-2. The method comprises providing 300 a first part 100 comprising a protruding connection element 102, wherein at least a portion of the connection element 112 is configured 104 to receive an adhesive; The next step comprises the providing 302 a second part 106 in the form of a tubular element configured to be connected to the first part 100.

In the following step, an adhesive 112 is deposited 304 on the portion or portions 104 of the protruding connection element configured to receive the adhesive. The adhesive may for example be deposited using a glue pistol, either manually or by means of an automated process. Other means of deposition are also possible.

Next, the first part 100 is connected 306 to the second part 106 by pressing the tubular element 106 onto the protruding connection element 102 Finally, a fixation element 108 is attached 308 to the first part 100 and to the second part 106 to fixate the first part 100 in relation to the second part 106. The adhesive is advantageously an anaerobic adhesive which hardens over time in room temperature. The support structure 200 is thereby sufficiently held together by the ridge 110 of the connection element 102 and/or the fixation element 108 so that it can proceed directly to the next step in the assembly line where the adhesive hardens over time during further assembly.

Prior to providing the first and second parts 100, 106, the parts may have been electroplated and/or painted, or subjected to any other pre-treatment steps which are temperature sensitive.

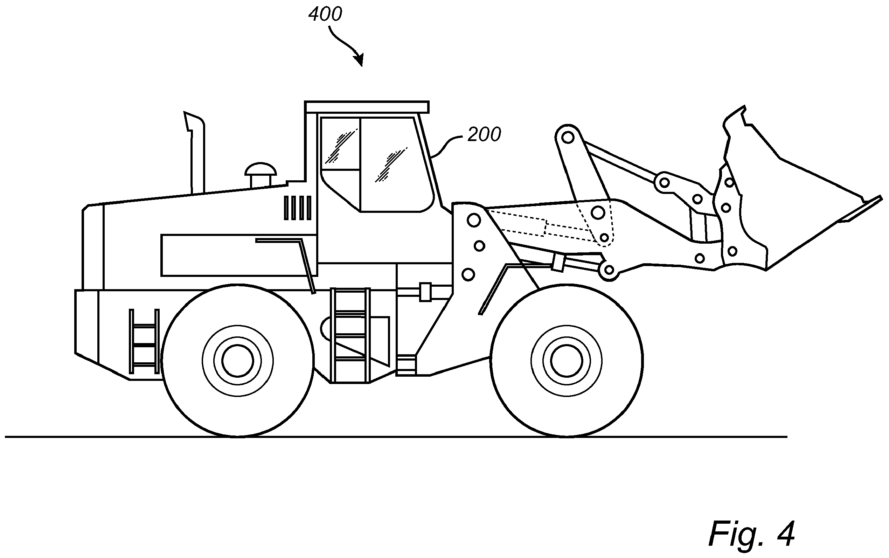

Fig. 4 schematically illustrates a wheel loader 400 comprising a roll-over protection structure 200 according to an embodiment of the invention.

Even though the invention has been described with reference to specific exemplifying embodiments thereof, many different alterations, modifications and the like will become apparent for those skilled in the art. For example, many different types of structures can be assembled using the described method .Also, it should be noted that parts of the system may be omitted, interchanged or arranged in various ways, the method and support structure yet being able to perform the functionality of the present invention.

Additionally, variations to the disclosed embodiments can be understood and effected by the skilled person in practicing the claimed invention, from a study of the drawings, the disclosure, and the appended claims. In the claims, the word "comprising" does not exclude other elements or steps, and the indefinite article "a" or "an" does not exclude a plurality. The mere fact that certain measures are recited in mutually different dependent claims does not indicate that a combination of these measured cannot be used to advantage.

## Claims

1. A method for assembling parts of a support structure (200) for a vehicle, the method comprising:
providing (300) a first part (100) comprising a protruding connection element (102), wherein at least a portion (104) of the connection element is configured to receive an adhesive;
providing (302) a second part (106) in the form of a tubular element configured to be connected to the first part;
depositing (304) an adhesive on the portion of the protruding connection element configured to receive the adhesive;
connecting (306) first part to the second part by pressing the tubular element onto the protruding connection element; and
attaching (308) a fixation element (108) to the first part and to the second part to fixate the first part in relation to the second part.

2. The method according to claim 1, wherein the portion of the connection element configured (104) to receive an adhesive comprises a recess, and wherein the thickness of the adhesive is defined by the depth of the recess.

3. The method according to claim 1 or 2, wherein the protruding connection element comprises a ridge (110), and wherein pressing the tubular element onto the protruding connection element comprises applying a force so that the ridge presses against an inner wall of the tubular element when the first and second parts are assembled.

4. The method according to any one of the preceding claims, wherein the attaching the fixation element comprises using an attachment method not involving heating.

5. The method according to any one of the preceding claims, wherein the first element is a corner element comprising a plurality of protruding connection elements, and wherein the method comprises attaching tubular elements to each of the protruding connection elements.

6. The method according to any one of the preceding claims, further comprising performing pretreatment of the first and second parts.

7. The method according to claim 6, wherein performing pretreatment comprises electroplating and/or painting

8. The method according to any one of the preceding claims, further comprising providing the assembled parts to an assembly line and attaching additional parts to the assembled part prior to hardening of the adhesive.

9. A support structure (202) for a vehicle comprising:
a first part (100) comprising a protruding connection element (102), wherein at least a portion (104) of the connection element is configured to receive an adhesive (112);
a second part (106) in the form of a tubular element, wherein the protruding connection element is arranged in an end portion (107) of the tubular element;
an adhesive arranged on the protruding connection element and configured to attach the first part to the second part; and
a fixation element (108) attached to the first part and to the second part to fixate the first part in relation to the second part.

10. The support structure according to claim 9, wherein the protruding connection element comprises a ridge (110) configured to press against an inner wall of the tubular element.

11. The support structure according to claim 9 or 10, wherein the support structure comprises a first element in the form of a corner element comprising a plurality of protruding connection elements and a plurality of tubular elements connected to each of the protruding connection elements.

12. The support structure according to any one of claims 9 to 11, wherein the fixation element is attached by means screws or bolts.

13. The support structure according to any one of claims 9 to 12, wherein the support structure is a roll over protection structure (200), ROPS.

14. The support structure according to any one of claims, 9 to 13, wherein the adhesive is an anaerobic adhesive

15. A vehicle (400) comprising a support structure according to anyone of claims 9 to 14.
